Europäisches Patentamt

European Patent Office

Office européen des brevets

(19)

(11) EP 0 740 807 B1

(12) FASCICULE DE BREVET EUROPEEN

(45) Date de publication et mention
de la délivrance du brevet:
**06.05.1998 Bulletin 1998/19**

(21) Numéro de dépôt: **95907025.1**

(22) Date de dépôt: **11.01.1995**

(51) Int Cl.⁶: **G05D 1/08**

(86) Numéro de dépôt international:
**PCT/FR95/00033**

(87) Numéro de publication internationale:
**WO 95/19592 (20.07.1995 Gazette 1995/31)**

(54) **PILOTE AUTOMATIQUE POUR HELICOPTERES A OBJECTIF VITESSE AIR**

AUTOPILOT FÜR HUBSCHRAUBER MIT SOLLWERT FÜR DIE LUFTGESCHWINDIGKEIT

HELICOPTER AUTOPILOT PROVIDING AIRSPEED CONTROL

(84) Etats contractants désignés:
**DE FR GB IT**

(30) Priorité: **12.01.1994 FR 9400497**

(43) Date de publication de la demande:
**06.11.1996 Bulletin 1996/45**

(73) Titulaire: **Durand, Bernard**
**F-13300 Salon de Provence (FR)**

(72) Inventeur: **Durand, Bernard**
**F-13300 Salon de Provence (FR)**

(74) Mandataire: **Schrimpf, Robert et al**
**Cabinet Regimbeau**
**26, Avenue Kléber**
**75116 Paris (FR)**

(56) Documents cités:
**EP-A- 0 272 058        FR-A- 2 282 644**
**FR-A- 2 567 270        US-A- 4 129 275**
**US-A- 5 169 090**

## Description

La présente invention concerne un procédé et un dispositif associé de commande automatique des gouvernes d'un aéronef utilisant un pilote automatique. Elle a notamment pour objet un dispositif d'aide au pilotage automatique des aéronefs à voilure tournante destiné à maintenir égales à telles valeurs désirées de consigne les composantes latérales et longitudinales de la vitesse air.

Il est connu d'utiliser des pilotes automatiques pour commander les moyens de commande de vol des aéronefs à voilure tournante, tels les hélicoptères. Ces pilotes automatiques sont constitués de deux chaînes d'asservissement, que l'on appelle couramment "pilote automatique de base" permettant de fixer et de conserver une valeur de consigne, cette valeur de consigne étant relative à l'assiette latérale du fuselage pour l'une de ces chaînes, et à l'assiette longitudinale pour l'autre.

Ces assiettes sont aussi qualifiées respectivement de roulis et de tangage.

Les valeurs de consigne sont fixées, soit par les valeurs des assiettes à l'instant de la mise en fonctionnement de la chaîne correspondante, soit ensuite par certaines actions du pilote sur les commandes de vol, appelées fonction "de pilotage transparent", soit enfin par la mise en service d'un organe facultatif appelé "coupleur de vol".

Ce coupleur de vol est un calculateur électronique qui, selon les fonctions qui lui sont dévolues par son constructeur, envoie au "pilote automatique de base" de nouvelles consignes d'assiettes de fuselage.

Pour stabiliser une vitesse air, il est actuellement nécessaire de munir le "pilote automatique de base" d'un "coupleur de tenue de vitesse". En effet, même avec une tenue d'assiette de fuselage parfaite, la vitesse d'un hélicoptère peut varier dans de très larges limites, ce qui est considéré comme un défaut majeur, pour le pilotage aux instruments en particulier. Le coupleur de tenue de vitesse nécessite au moins un capteur de vitesse, des moyens de commutation de fonctions et des moyens d'introduction des vitesses de référence de consigne .

Le fonctionnement d'un coupleur de tenue de vitesse air est schématisé comme suit:
la différence entre la vitesse actuelle et la vitesse air de consigne sert à élaborer une nouvelle consigne d'assiette du fuselage, qui est transmise au "pilote automatique de base" pour exécution.

On a donc affaire, pour obtenir une fonction de pilotage.importante à un système d'une complexité certaine, dont il est par ailleurs difficile d'assurer la transparence une fois le "coupleur" engagé.

Des dispositifs d'aide au pilotage automatique d'aéronefs correspondant au préambule de la revendication 1 sont décrit notamment dans les documents US-A-4 129 275, FR-A-2 282 264 et FR-A-2 567 270.

Le but de l'invention est notamment de remédier à cette complexité en combinant d'une manière entièrement nouvelle des signaux disponibles à bord des hélicoptères, cette combinaison supprimant l'obligation de tenue préalable d'assiettes de fuselage, donc l'existence d'un coupleur de vitesse air.

L'invention est définie par l'objet de la revendication 1.

Selon une caractéristique, au moins le signal fonction de l'assiette de fuselage et le signal (24S) fonction de la position de la commande cyclique des pales du rotor principal ou le cas échéant, des rotors principaux, entrent dans les moyens de sommation de chacune des chaînes.

Selon une caractéristique additionnelle, pour l'une des chaînes, le signal fonction de l'assiette de fuselage (1S) est un signal d'assiette de tangage (TETAF) et le signal de position de commande cyclique (24S) est un signal de position de commande cyclique longitudinale (DM1), et pour l'autre chaîne, le signal d'assiette de fuselage (1S) est un signal d'assiette de roulis (PHIF) et le signal de position de commande cyclique (24S) est un signal de position de commande cyclique latérale (DL1).

Selon une autre caractéristique additionnelle, les moyens de sommation effectuent une combinaison linéaire des signaux (1S) et (24S).

Selon une autre caractéristique additionnelle, la combinaison linéaire est de la forme :

$$K1*TETAF + K2*DDM1 \text{ en tangage}$$

$$K3*PHIF + K4*DDL1 \text{ en roulis}$$

les coefficients K1, K2, K3, K4 étant des coefficients constants ou variables d'adaptation des gains.

Selon une autre caractéristique additionnelle, les coefficients K1, K2, K3, K4 sont fixés numériquement par la relation cinématique reliant les commandes de vol cycliques de l'aéronef respectivement de tangage et de roulis et les angles de pale respectivement associés. D'une manière plus précise et selon les règles de l'art dans les techniques de réglage des commandes de vol des hélicoptères, le rapport K1/K2 sera égal au rapport b/a des deux quantités "a" et "b" définies ci après.

"a" est une petite variation de la position de commande cyclique mesurée sur le capteur DDM1 (24S).

"b" est la variation angulaire du pas de la pale du rotor, placée en position canonique dite "pale avançante", et provoquée par la variation "a".

Le rapport K3/K4 relatif à la chaîne de roulis est établi de manière équivalente avec la commande cyclique latérale DDL1 et la pale en position canonique dite " pale arrière".

Selon une autre caractéristique, les moyens de génération d'un signal (1S) fonction de l'assiette de fuselage sont constitués par un accéléromètre calé sur une référence liée au fuselage.

Selon une autre caractéristique, les moyens de génération d'un signal (1S) fonction de l'assiette de fuselage sont constitués par un niveau pendulaire calé sur une référence liée au fuselage.

Selon une autre caractéristique, la valeur de la combinaison effectuée par les moyens de sommation est visualisée à l'équipage sur un instrument à lecture directe de type analogique ou numérique, et, de façon opportune, sur l'instrument du type "horizon artificiel" normalement utilisé pour le pilotage des assiettes du fuselage . Cette architecture possède la nouvelle propriété de pouvoir simultanément et sur le même instrument contrôler les variations rapides d'assiette de fuselage et piloter les vitesses air . A chaque graduation d'assiette correspond en vol stabilisé une vitesse associée. On sait que ce résultat, souhaitable par les normes de pilotage aux instruments ne peut pas être généralement atteint, compte tenu de l'irrégularité des relations "assiette/vitesse" affectant la plupart des hélicoptères.

Une particularité remarquable du dispositif selon l'invention est qu'il est compatible avec un pilote automatique classique dans la mesure où il est loisible de passer de l'un à l'autre, si tel est le souhait d'un utilisateur, par de simples commutations dans les signaux électriques transportant les informations des capteurs.

Une autre particularité de l'invention est qu'elle permet de substituer, dans l'une de ses réalisations des informations accélérométriques aux informations gyroscopiques d'assiette de fuselage ; cette suppression revêt un avantage technologique et financier d'importance majeure en particulier pour :

- l'équipement d'hélicoptères peu sophistiqués,
- la réalisation d'un mode de fonctionnement en secours d'un mode principal.

Une autre particularité de l'invention est son aptitude à permettre un nouveau mode de pilotage automatique de la chaîne dévolue traditionnellement à l'axe de roulis. En effet, en autorisant un mode nouveau de tenue de vitesse air latérale, indépendant du mode de tenue confié à l'axe de tangage (tenue d'assiette ou tenue de vitesse longitudinale), l'invention permet l'obtention de qualités de pilotage nouvelles irréalisables auparavant.

Enfin, un nouvel agencement de la visualisation dévolue traditionnellement aux assiettes de fuselage de roulis et de tangage permet un nouveau mode de contrôle simultané de la vitesse air et des assiettes de fuselage sur un même instrument.

D'autres avantages et caractéristiques de la présente invention apparaîtront dans la description de deux variantes de réalisation de l'invention, en regard des figures annexées parmi lesquelles:

- la figure 1 présente un schéma simplifié d'un dispositif de pilotage automatique de base à mode principal de tenue d'assiettes de fuselage,

- la figure 2 montre un schéma d'un dispositif de pilotage automatique pour la stabilisation de la vitesse au d'un hélicoptère selon une première variante de réalisation,
- la figure 3 présente un schéma d'un dispositif de pilotage automatique pour la stabilisation de la vitesse au d'un hélicoptère selon une seconde variante de réalisation.

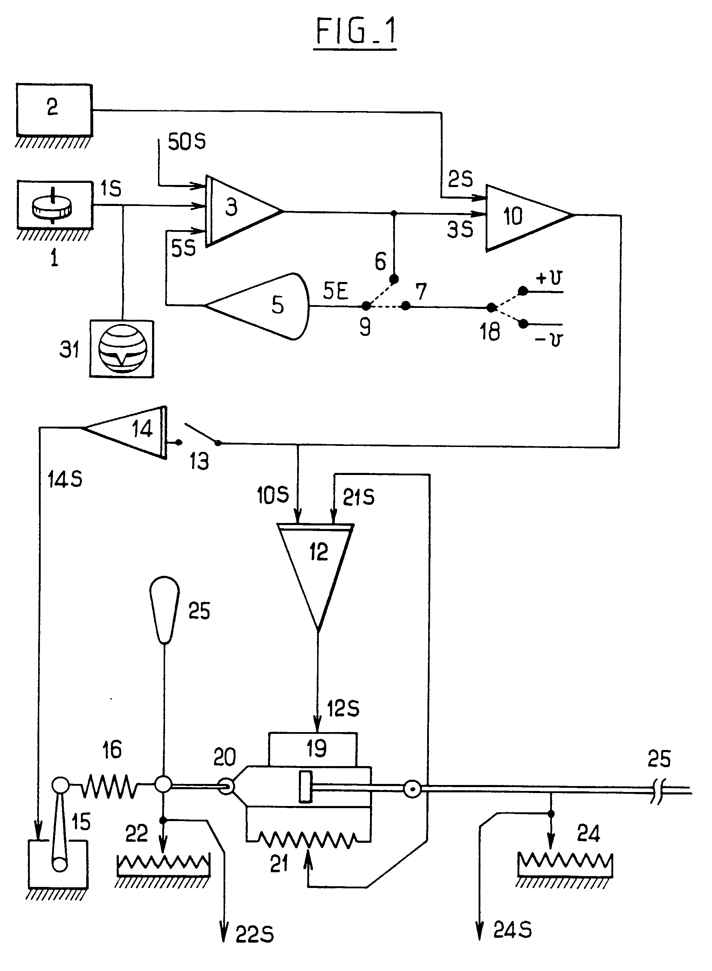

Comme présenté sur la figure 1, un pilote automatique de base d'hélicoptère à mode principal de tenue d'assiette de fuselage se compose de deux chaînes, l'une à mode principal de tenue d'assiette de tangage et l'autre à mode principal de tenue d'assiette de roulis. Chacune de ces deux chaînes comporte des moyens 1 de génération d'un signal (1S) fonction de l'assiette de fuselage, en l'occurence un capteur gyroscopique 1 d'assiettes de fuselage, des moyens 2 de génération d'un signal (2S) fonction de la vitesse angulaire de fuselage, des moyens de sommation des signaux, en l'occurence deux sommateurs (3) et (10), des moyens (5) d'intégration des signaux et des moyens d'actionnement des gouvernes de vol correspondantes, en l'occurence un amplificateur de puissance (12) et un vérin (20).

Le capteur gyroscopique (1) mesure la valeur de l'assiette de fuselage et génère un signal (1S) fonction de cette valeur.

Les moyens 2 peuvent être un capteur (2) de vitesse angulaire de fuselage ou, dans une variante répandue, être remplacé par une fonction électrique, dérivée du signal d'assiette (1S). Le signal (2S) issu du capteur (2) sert à l'amortissement dynamique de la boucle de pilotage automatique en assiette.

Les entrées du sommateur (3) sont le signal (1S) d'assiette de fuselage, un signal (5S) issu de la sortie de l'intégrateur (5) et éventuellement un signal (50S) issu d'un coupleur de vol . La sortie (3S) de ce sommateur est fonction de l'écart angulaire entre l'assiette de fuselage actuelle et l'assiette de fuselage souhaitée. C'est le signal communément appelé "signal d'erreur" dans les modèles d'asservissement.

L'intégrateur (5) est dit " de synchronisation ". Le signal d'entrée (5E) est:

- soit la sortie (3S) du sommateur (3),
- soit une tension de commande électrique (7) interne au pilote automatique de base

La sélection de l'entrée (5E) de l'intégrateur (5) s'effectue par une commutation manuelle ou automatique sous la dépendance des divers "modes de pilotage" possibles. La sortie (5S) de cet intégrateur représente l'assiette de fuselage de consigne souhaitée.

Le sommateur (10) permet essentiellement la sommation de la vitesse angulaire de fuselage (2S) avec la sortie (3S) du sommateur (3). La sortie (1OS) du sommateur (10) représente la position souhaitée du vérin de pilotage automatique (20).

L'entrée de l'amplificateur de puissance (12) est constituée par la somme des signaux (1OS) et (21S) et la sortie est telle qu'elle permet l'actionnement du vérin de pilotage (20).

Le vérin (20) de pilotage automatique est généralement monté "en série" dans la commande de vol considérée. Usuellement, on utilise la commande de vol cyclique longitudinale pour le pilotage automatique des assiettes de fuselage de tangage et la commande de vol cyclique latérale pour le pilotage automatique des assiettes de fuselage de roulis. Le vérin de pilotage comporte généralement un capteur de déplacement mécanique de sa propre sortie (21) dont le signal électrique de sortie (21S) sert à assurer la linéarité entre la tension électrique de commande (1OS) et le débattement effectif du vérin. C'est la raison pour laquelle l'amplificateur de puissance (12) reçoit sur son entrée les deux signaux (1OS) et (21S).

Les débattements du vérin (20) s'ajoutent mécaniquement aux mouvements du manche cyclique (25) du pilote au moyen de mécanismes classiques connus dans les techniques de l'hélicoptère.L'autorité du vérin de pilotage automatique (20) est un faible pourcentage de l'autorité totale conférée par le constructeur aux deux commandes longitudinale et latérale issues du manche cyclique.

Un dispositif connu sous le nom de "trim automatique" permet d'actionner le manche cyclique à la place du pilote. D'une manière classique, le dispositif de trim automatique peut être constitué par un moteur électrique (15) relié à la commande cyclique par un dispositif élastique 16 pour chacun des axes tangage et roulis. Ce dispositif élastique joue le rôle de loi d'efforts artificiels et de sécurité vis à vis des risques de blocage du moteur (15) de trim automatique.

Le moteur (15) est alimenté par un amplificateur (14) mis en action par un interrupteur automatique (13) selon des logiques connues qui ne sont pas propres à l'invention.

On appellera respectivement DMPA les débattements mécaniques du vérin (20) de pilotage en tangage et DLPA les débattements mécaniques du vérin (20) de pilotage en roulis. Les mesures (21S) de ces débattements sont effectuées par les capteurs (21).

On appellera respectivement DM1 et DL1 les débattements mécaniques des commandes de vol mesurés après les vérins (20) de pilotage automatique, par exemple prés du plateau cyclique du rotor de l'hélicoptère. Les mesures de ces débattements sont effectuées par des capteurs (24) dont les sorties (24S) ne sont généralement pas utilisées dans les pilotes automatiques classiques.

On visualise sur un instrument de planche de bord (31) appelé "horizon artificiel" les informations (1S) d'assiette de tangage et de roulis. Dans certaines réalisations on utilise un capteur indépendant d'assiettes de fuselage pour alimenter l'instrument (31).

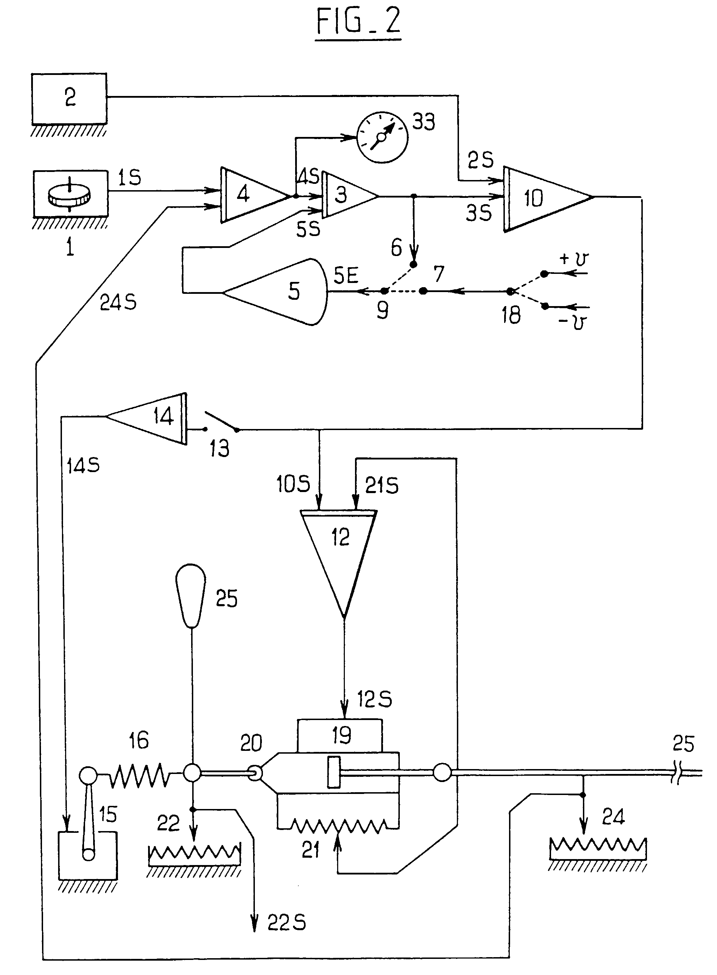

Dans le mode de réalisation de l'invention montré à la figure 2, l'entrée classique (1S) est remplacée par la somme pondérée (4S) des signaux (1S) et (24S). Pour la commodité de l'exposé cette somme est effectuée par un sommateur (4) séparé du sommateur (3), mais en pratique un seul sommateur (3) à trois entrées peut suffire.

Dans un mode spécifique de l'invention, l'amplitude du signal (1S) est maintenue avec le même gain que celui que l'on utiliserait dans une réalisation classique et l'on rajoute à l'entrée du sommateur (4), selon une amplitude et une polarité convenables, le signal de position de commande cyclique respectivement DMI et DL1 selon la chaîne considérée. Tous les autre signaux décrits précédemment restent inchangés.

La nouvelle propriété de cette réalisation est de fixer comme référence au pilote automatique un signal égal à la somme pondérée du signal (1S) de l'assiette de fuselage et du signal (24S) de la valeur du pas cyclique, respectivement longitudinal et latéral selon la chaîne considérée.

Or il est connu que cette somme pondérée, combinaison selon une proportion définie des deux signaux, a pour propriété, en vol stabilisé sans accélérations, de représenter la vitesse air selon l'axe concerné.

Par conséquent, et à condition d'avoir réglé convenablement la combinaison des signaux (1S) et (24S), le pilote automatique se verra fixer comme référence non plus une assiette de fuselage mais une vitesse air.

La sortie (5S) de l'intégrateur (5) de "synchronisation" représente désormais non plus l'assiette de référence mais la vitesse air de référence. Cette vitesse se règle au moyen de la commutation (9) et peut donc prendre de façon non limitative:

- la valeur de la vitesse air à l'instant de la mise en fonction de la chaîne correspondante,
- la valeur imposée par le pilote au cours des manoeuvres manuelles dites de "trim manuel", consistant selon un mode particulier et à titre d'exemple, à imposer une tension électrique programmée à l'entrée du circuit (8) à l'aide d'un interrupteur (18) adéquat. Il en résulte une loi de variation de vitesse de référence, par exemple linéaire de + 1.5 mètre/seconde/seconde,
- la valeur de la vitesse air actuelle à l'instant de la remise en fonction des efforts artificiels du manche cyclique,
- la valeur d'une future vitesse air préprogrammée ou calculée en fonction de critères d'accélération actuels .La dynamique de la réalisation nouvelle se prête particulièrement à cette fonction inexistante sur les pilotes automatiques classiques.

Les trois premières fonctions de réglage de la vitesse air de référence font par contre partie des règles de l'art des pilotes automatiques pour hélicoptères et l'invention consiste à les appliquer aux vitesses air.

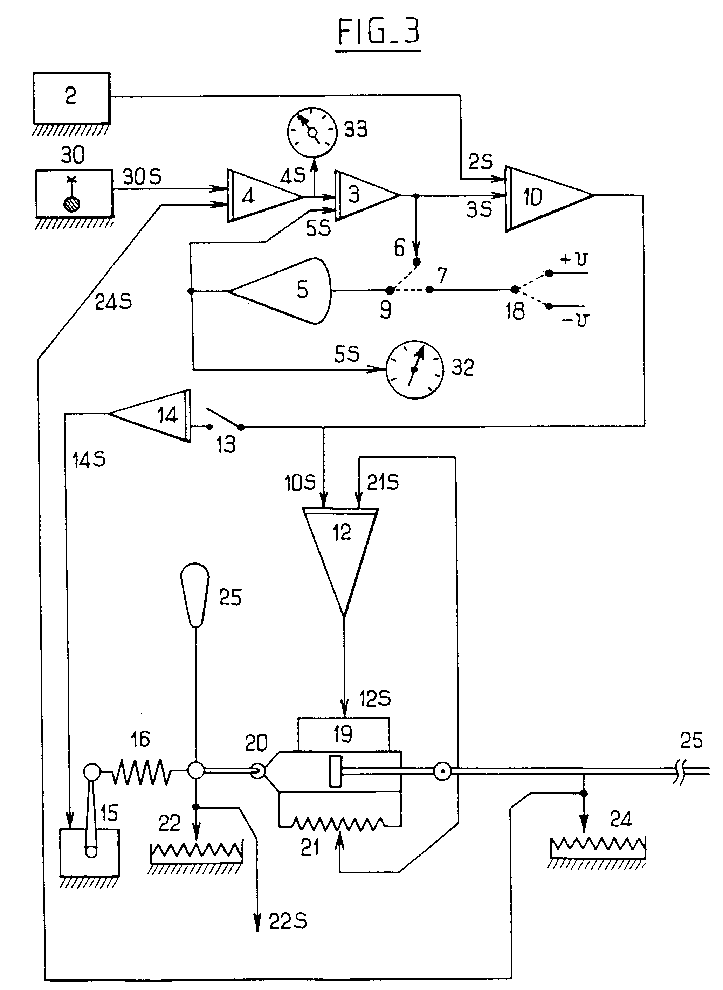

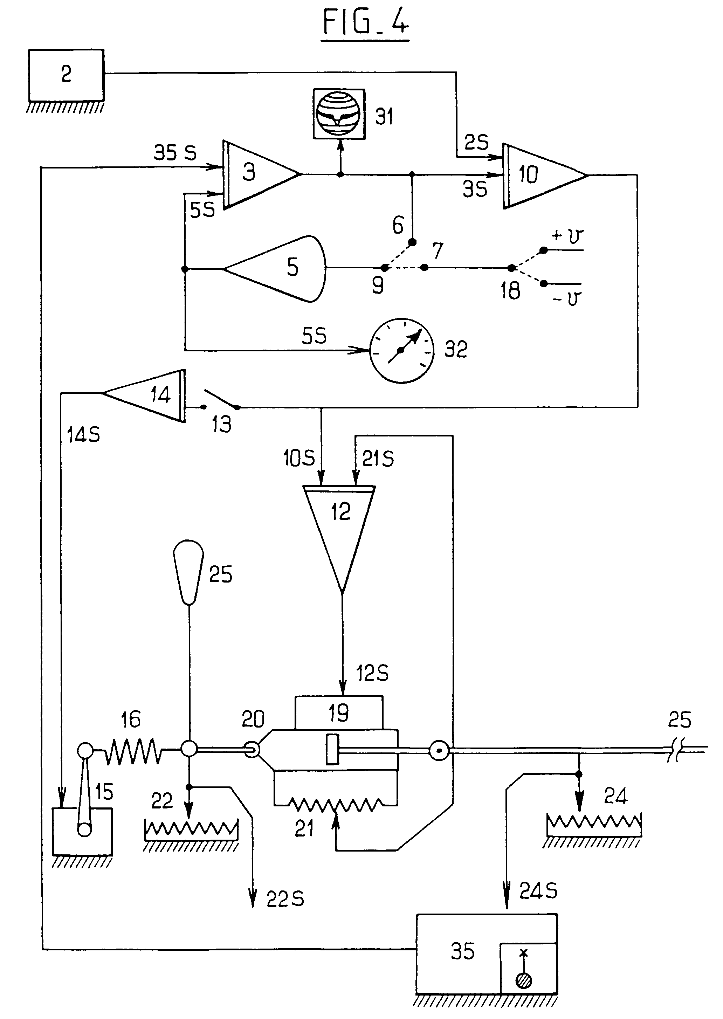

Dans le mode de réalisation présenté en figure 3, le capteur (1) d'assiette de fuselage est supprimé et remplacé par un capteur d'accélération (30) référencé au fuselage, ou, ce qui revient au même, par un niveau pendulaire calé selon les axes de référence du fuselage.

Ces capteurs d'accélération linéaire sont par nature sensibles aux forces d'inertie et à celles de gravitation terrestre. Ils constituent, en combinaison avec les positions de pas cyclique DMI et DL1, les capteurs principaux de mesure de la vitesse air selon les inventions décrites dans les documents FR-A-2 282 644 et FR-A-2 567 270.

Les solutions dans lesquelles les signaux (2S) de vitesse angulaire de fuselage sont constitués d'un terme d'assiette de fuselage soumis à l'opération de dérivation ne sont évidemment pas adaptés à ce second mode de fonctionnement ; on utilisera avec profit un capteur (2) de type gyrométrique pour élaborer le signal d'amortissement des mouvements rapides de fuselage, amortissement toujours souhaitable quelque soit le mode de pilotage.

Une solution à base de gyromètre est par ailleurs moins onéreuse et plus fiable pour le seul but de l'élaboration d'un terme d'amortissement, que l'utilisation d'un gyroscope d'assiettes.

Par ailleurs l'invention dans un mode particulier propose d'utiliser comme terme d'amortissement supplémentaire ou principal la dérivée du signal (4S) somme de (30S) et (24S). Ce signal (4S) étant l'image de la vitesse air, sa dérivée est l'image de l'accélération air.

Selon les règles de l'art, l'opportunité et la proportion de signal dérivé que l'on doit introduire se détermine essentiellement par les essais en vol des matériels.

## Revendications

1. Dispositif d'aide au pilotage automatique des aéronefs à voilure tournante destiné à maintenir égales à telles valeurs désirées de consigne les composantes latérales et longitudinales de la vitesse air et comportant deux chaînes, l'une en roulis et l'autre en tangage, chacune de ces chaînes comportant des moyens (1) de génération d'un signal (1S) fonction de l'assiette du fuselage, des moyens de sommation dont une entrée reçoit ledit signal fonction de l'assiette du fuselage, des moyens d'intégration (5) pour la génération d'un signal (5S) de consigne, ce signal de consigne étant transmis en entrée des moyens de sommation, des moyens d'actionnement des gouvernes de vol en fonction d'un signal en sortie des moyens de sommation, des moyens (24) pour la génération d'un signal (24S) fonction de la position de commande cyclique des pales du rotor principal, ou le cas échéant des rotors principaux, caractérisé en ce que la sortie de ces derniers moyens (24) est reliée à l'entrée des moyens de sommation (4, 3, 10), les moyens de sommation (4, 3, 10) réalisant une somme pondérée du signal (15) de l'assiette du fuselage et du signal (24S) fonction de la position de commande cyclique, les moyens d'intégration (5) étant tels que le signal en sortie de ces moyens (5) est représentatif d'une vitesse air de référence.

2. Dispositif selon la revendication 1, caractérisé en ce que pour l'une des chaînes, le signal d'assiette de fuselage (1S) est un signal TETAF d'assiette de tangage et le signal de position de commande cyclique (24S) est un signal DM1 de position de commande cyclique longitudinale, et pour l'autre chaîne, le signal d'assiette de fuselage (1S) est un signal PHIF d'assiette de roulis et le signal de position de commande cyclique (24S) est un signal DL1 de position de commande cyclique latérale.

3. Dispositif selon la revendication 2, caractérisé en ce que la somme pondérée que réalisent les moyens de sommation est :

$$K1*TETAF + K2*DDM1 \text{ en tangage}$$

$$K3*PHIF + K4*DL1 \text{ en roulis}$$

les coefficients K1, K2, K3, K4 étant des coefficients constants ou variables d'adaptation des gains.

4. Dispositif selon la revendication 3, caractérisé en ce que les coefficients K1, K2, K3, K4 sont fixés numériquement par la relation cinématique reliant les commandes de vol cycliques de l'aéronef, respectivement de tangage et de roulis, et les angles de pale respectivement associés.

5. Dispositif selon l'une des revendications précédentes, caractérisé en ce que les moyens (1) de génération d'un signal (1S) fonction de l'assiette de fuselage sont constitués par un accéléromètre calé sur une référence liée au fuselage.

6. Dispositif selon l'une des revendications précédentes, caractérisé en ce que les moyens (1) de génération d'un signal (1S) fonction de l'assiette de fuselage sont constitués par un niveau pendulaire calé sur une référence liée au fuselage.

7. Dispositif selon l'une des revendications précédentes, caractérisé en ce que la valeur de la combinaison effectuée par les moyens de sommation est visualisée à l'équipage sur un instrument (31) à lecture directe de type analogique ou digital.

**8.** Dispositif selon la revendication 7, caractérisé en ce que l'instrument (31) est du type "horizon artificiel".

**Patentansprüche**

**1.** Hilfsvorrichtung zur automatischen Fluglageregelung von Drehflügelflugzeugen, welche Vorrichtung dazu bestimmt ist, die Seiten- und Längskomponenten der Eigengeschwindigkeit auf gewünschten Einstellwerten zu halten, und zwei Systeme, nämlich eines für die Rollage und eines für die Nicklage umfaßt, wobei jedes dieser Systeme Einrichtungen (1) zum Erzeugen eines Signals (1S) in Abhängigkeit von der Fluglage des Rumpfes, Addiereinrichtungen, an deren einem Eingang das Signal in Abhängigkeit von der Fluglage des Rumpfes liegt, Integrationseinrichtungen (5) zum Erzeugen eines Einstellsignals (5S), welches Einstellsignal den Addiereinrichtungen eingegeben wird, Einrichtungen zum Betätigen von Flugsteuerorganen in Abhängigkeit vom Ausgangssignal der Addiereinrichtungen und Einrichtungen (24) zum Erzeugen eines Signals (24S) in Abhängigkeit von der Drehsteuerposition der Blätter des Hauptrotors oder gegebenenfalls der Hauptrotoren umfaßt, dadurch gekennzeichnet, daß der Ausgang der zuletzt genannten Einrichtungen (24) mit dem Eingang der Addiereinrichtungen (4, 3, 10) verbunden ist, die Addiereinrichtungen (4, 3, 10) eine gewichtete Summe aus dem Signal (1S) der Rumpffluglage und dem Signal (24S) in Abhängigkeit von der Drehsteuerposition bildet, und die Integrationseinrichtungen (5) derart ausgebildet sind, daß das Ausgangssignal dieser Einrichtungen (5) eine Bezugseigengeschwindigkeit wiedergibt.

**2.** Vorrichtung nach Anspruch 1, dadurch gekennzeichnet, daß für eines der Systeme das Signal (1S) der Rumpffluglage ein Nicklagesignal TETAF ist und daß das Signal (24S) der Drehsteuerposition ein Längsdrehsteuerpositionssignal DM1 ist und daß für das andere System das Signal (1S) der Rumpffluglage ein Rollfluglagesignal PHIF ist und das Signal (24S) der Drehsteuerposition ein Signal der Seitendrehsteuerposition DL1 ist.

**3.** Vorrichtung nach Anspruch 2, dadurch gekennzeichnet, daß die gewichtete Summe, die von den Addiereinrichtungen gebildet wird, lautet:

$$K1*TETAF + K2*DDM1 \text{ für die Nicklage}$$

$$K3*PHIF + K4*DL1 \text{ für die Rollage,}$$

wobei die Koeffizienten K1, K2, K3, K4 Konstanten oder Regelfaktoranpassungsvariablen sind.

**4.** Vorrichtung nach Anspruch 3, dadurch gekennzeichnet, daß die Koeffizienten K1, K2, K3, K4 in kinematischer Hinsicht in Verbindung zu den Drehflugsteuerungen des Flugzeuges jeweils hinsichtlich der Nick- und der Rollage und den jeweils zugehörigen Blattwinkeln numerisch festliegen.

**5.** Vorrichtung nach einem der vorhergehenden Ansprüche, dadurch gekennzeichnet, daß die Einrichtungen (1) zum Erzeugen eines Signals (1S) in Abhängigkeit von der Rumpffluglage aus einem Beschleunigungsmesser bestehen, der an einen Bezugspunkt geklemmt ist, der mit dem Rumpf verbunden ist.

**6.** Vorrichtung nach einem der vorhergehenden Ansprüche, dadurch gekennzeichnet, daß die Einrichtungen (1) zum Erzeugen eines Signals (1S) in Abhängigkeit von der Rumpffluglage aus einer Pendelwaage bestehen, die an einen bezugspunkt geklemmt ist, der mit dem Rumpf verbunden ist.

**7.** Vorrichtung nach einem der vorhergehenden Ansprüche, dadurch gekennzeichnet, daß der Kombinationswert, der von den Addiereinrichtungen gebildet wird, der Besatzung durch ein direkt ablesbares Instrument (31) vom analogen oder digitalen Typ sichtbar gemacht wird.

**8.** Vorrichtung nach Anspruch 7, dadurch gekennzeichnet, daß das Instrument (31) ein Kreiselhorizontinstrument ist.

**Claims**

**1.** Apparatus for assisting automatic piloting of rotating wing aircraft for the purpose of keeping the lateral and longitudinal components of the airspeed equal to desired reference values therefore, the apparatus comprising two systems, one for roll and the other for pitch, each of said systems having means (1) for generating a signal (1S) that is a function of the trim of the fuselage, summing means having one input receiving said signal that is a function of the trim of the fuselage, integrator means (5) for generating a reference signal (5S), said reference signal being applied as an input of the summing means, means for actuating the flight controls as a function of an output signal of the summing means, means (24) for generating a signal (24S) that is a function of the position of the cyclic control for the blades of the main rotor or, where appropriate, of the main rotor(s), the apparatus being characterized in that the output of said last mentioned means (24) is connected to the input of the summing means (4, 3, 10), the summing means (4, 3, 10) producing a weighted sum of the signal (15) of the trim of the fuselage and of the signal (24S) that is a function of the position of the cyclic control, the integrator means (5) being such that the output signal of said means (5) is representative of a reference airspeed.

2. Apparatus according to claim 1, characterized in that for one of the systems, the fuselage trim signal (1S) is a pitch trim signal THETAF and the cyclic control position signal (24S) is a longitudinal cyclic control position signal DM1, and for the other system, the fuselage trim signal (1S) is a roll trim signal PHIF and the cyclic control position signal (24S) is a lateral cyclic control position signal DL1.

3. Apparatus according to claim 2, characterized in that the weighted sum which produces the summing means is as follows:

   K1*THETAF + K2*DDM1 for pitch, and

   K3*PHIF + K4*DL1 for roll,

   the coefficients K1, K2, K3, and K4 being constant or variable coefficients for matching gain.

4. Apparatus according to claim 3, characterized in that the coefficients K1, K2, K3, and K4 are fixed numerically by the dynamic relationship interconnecting the cyclic flight controls of the aircraft, in pitch and roll respectively, with the blade angles respectively associated therewith.

5. Apparatus according to any preceding claim, characterized in that the means (1) for generating a signal (1S) that is a function of the fuselage trim are constituted by an accelerometer associated with a reference tied to the fuselage.

6. Apparatus according to any preceding claim, characterized in that the means (1) for generating a signal (1S) that is a function of the fuselage trim are constituted by a pendular level associated with a reference tied to the fuselage.

7. Apparatus according to any preceding claim, characterized in that the value of the combination performed by the summing means is displayed to the crew on a direct readout instrument (31) of analog or digital type.

8. Apparatus according to claim 9, characterized in that the instrument (31) is of the "artificial horizon"

type.

## FIG_1

# FIG. 2

# FIG_3

# FIG. 4